# EUROPÄISCHE PATENTANMELDUNG

(11) **EP 2 592 209 A1**
(43) Veröffentlichungstag der Anmeldung: **15.05.2013**
(21) Anmeldenummer: 11188825.1
(22) Anmeldetag: 11.11.2011
(51) Int. Cl.: E06B 3/663, E06B 3/677

(54) **Vakuumisolierplatte**

(71) Anmelder: Bayer MaterialScience AG, 64293 Darmstadt (DE)
(72) Erfinder: Tichai, Thomas, 64823 Gross-Umstadt (DE); Fortas, Karim, 77855 Achern (DE); Pingel, Norbert, Dr., 64397 Modautal (DE)
(74) Vertreter: Klimiuk, Meike

(57) **Zusammenfassung**

Die Erfindung betrifft eine Vakuumisolierplatte (2), umfassend ein erstes Scheibenelement (4), mindestens ein zweites Scheibenelement (6), eine Mehrzahl von zwischen dem ersten Scheibenelement (4) und dem zweiten Scheibenelement (6) angeordneten Abstandshalterelementen (10, 10.1, 10.2) und einen Randverschluss (14) zum vakuumdichten Verschließen des Raumes (16) zwischen dem ersten Scheibenelement (4) und dem zweiten Scheibenelement (6), wobei mindestens ein Abstandshalterelement (10, 10.1, 10.2) aus einem Kunststoffmaterial gebildet ist.

## Beschreibung

Die Erfindung betrifft eine Vakuumisolierplatte, welche ein erstes Scheibenelement, mindestens ein zweites Scheibenelement, eine Mehrzahl von zwischen dem ersten Scheibenelement und dem zweiten Scheibenelement angeordneten Abstandshalterelementen und einen Randverschluss zum vakuumdichten Verschließen des Raumes zwischen dem ersten Scheibenelement und dem zweiten Scheibenelement umfasst. Darüber hinaus betrifft die Erfindung ein Verglasungssystem und ein Verfahren zur Herstellung einer Vakuumisolierplatte.

In Verglasungssystemen werden heutzutage vermehrt Vakuumisolierplatten eingesetzt, welche verbesserte Wärmedämmungseigenschaften als andere Mehrscheibensysteme aufweisen. Grund hierfür ist der evakuierte Zwischenraum zwischen zwei Scheibenelementen. Um eine Verformung der Scheibenelemente aufgrund eines einseitig auf den Scheibenelementen lastenden Luftdrucks zu verhindern, sind zwischen den Scheibenelementen Abstandshalterelemente angeordnet, welche auf der Fläche der Scheibenelemente verteilt sind. Beispielhafte Vakuumisolierplatten sind insbesondere Vakuumisolierglasplatten.

Wie bereits beschrieben wurde, weisen herkömmliche Vakuumisolierglasplatten mindestens ein oberes Scheibenelement und ein unteres Scheibenelement auf, wobei der Raum zwischen den Scheibenelementen evakuiert ist. Eine beispielhafte Vakuumisolierglasplatte ist in der EP 0 771 31 B1 offenbart. Zwei voneinander beabstandete Scheibenelemente werden an den Kanten durch Laserschweißen versiegelt und der Zwischenraum zwischen den Scheibenelementen evakuiert. Ferner sind Abstandshalter in Form von Glaskugeln vorgesehen, um die beiden Scheibenelemente voneinander zu beabstanden.

Eine ähnliche Vakuumisolierglasplatte ist bereits aus der EP 1 978 199 A1 bekannt. Die Vakuumisolierglasplatte gemäß dieser Druckschrift weist rechteckförmige oder kugelförmige Abstandshalterelemente aus Metall auf. Die bei herkömmlichen Vakuumisolierglasplatten häufig eingesetzten Abstandshalterelemente aus Metall weisen jedoch Nachteile auf. So sind entsprechende Abstandshalterelemente stets sichtbar und bringen daher optische Beeinträchtigungen mit sich. Ferner hat es sich gezeigt, dass die Kontaktstellen zwischen den metallischen Abstandshalterelementen und den Scheibenelementen ungewollte Sollbruchstellen darstellen. Darüber hinaus ist die Anordnung einer Mehrzahl von einzelnen Abstandshalterelementen in Vakuumisolierplatten insbesondere bei einem industriellen Herstellungsprozess mit einem hohen Aufwand verbunden. Schließlich weist Metall eine hohe Wärmeleitfähigkeit auf. Dies verringert jedoch die Isolationseigenschaften einer entsprechenden Vakuumisolierplatte.

Daher liegt der vorliegenden Erfindung die Aufgabe zugrunde, eine Vakuumisolierplatte bereitzustellen, welche verbesserte Isolationseigenschaften aufweist und gleichzeitig in einfacher Weise herstellbar ist.

Die zuvor hergeleitete und aufgezeigte Aufgabe wird gemäß einem ersten Aspekt der Erfindung durch eine Vakuumisolierplatte, insbesondere eine Vakuumisolierglasplatte, gemäß dem Patentanspruch 1 gelöst. Die Vakuumisolierplatte umfasst ein erstes Scheibenelement. Die Vakuumisolierplatte umfasst mindestens ein zweites Scheibenelement. Die Vakuumisolierplatte umfasst eine Mehrzahl von zwischen dem ersten Scheibenelement und dem zweiten Scheibenelement angeordneten Abstandshalterelementen. Die Vakuumisolierplatte umfasst einen Randverschluss zum vakuumdichten Verschließen eines Raumes zwischen dem ersten Scheibenelement und dem zweiten Scheibenelement. Mindestens ein Abstandshalterelement ist aus einem Kunststoffmaterial gebildet.

Im Gegensatz zum Stand der Technik wird gemäß der Lehre der Erfindung eine Vakuumisolierplatte mit verbesserten Isoliereigenschaften bereitgestellt, indem die Abstandshalterelemente nicht aus Metall oder Glas sondern aus einem Kunststoffmaterial gebildet werden. Kunststoffmaterial weist zum einen eine geringere Wärmeleitfähigkeit auf und zum anderen können Kunststoffabstandshalterelemente in einfacher Weise hergestellt und angeordnet werden.

Die Vakuumisolierplatte, insbesondere eine Vakuumisolierglasplatte, weist mindestens zwei Scheibenelemente auf. Die Scheibenelemente sind insbesondere gegenüberliegend und parallel zueinander angeordnet. Vorzugsweise können als Scheibenelemente geeignete Glasscheiben eingesetzt werden. Die Kanten der beiden Scheibenelemente können vakuumdicht verschlossen sein. Beispielsweise kann ein vakuumdichter Randverschluss durch Laserschweißen erzeugt werden.

Um eine stabile Platte trotz des evakuierten Raums zwischen den zumindest zwei Scheibenelementen zu erzielen, ist eine Mehrzahl an Abstandshalterelemente zwischen den zumindest zwei Scheibenelementen vorgesehen. Es ist erkannt worden, dass eine Vakuumisolierplatte mit verbesserten Wärmedämmungseigenschaften bereitgestellt werden kann, wenn vorzugsweise sämtliche Abstandshalterelemente aus einem Kunststoffmaterial hergestellt sind. Neben besseren Wärmedämmungseigenschaften sind Kunststoffabstandshalterelemente flexibler als Metall oder Glas und führen daher insbesondere nicht zu ungewollten Sollbruchstellen. Des Weiteren lassen sich Kunststoffabstandshalterelemente einfach und kostengünstig herstellen.

Die Abstandshalterelemente aus Kunststoff können grundsätzlich beliebig geformt sein. Gemäß einer ersten Ausführungsform der erfindungsgemäßen Vakuumisolierplatte kann mindestens ein Abstandshalterelement zylinderförmig geformt sein. Zylinderförmige Abstandshalterelemente können insbesondere in einfacher Weise hergestellt werden. Alternativ kann mindestens ein Abstandshalterelement kegelförmig oder pyramidenförmig geformt sein. Entsprechend geformte Abstandshalterelemente weisen hinsichtlich der Isolationseigenschaft der Vakuumisolierplatte Vorteile auf. Grund hierfür ist, dass eine Kontaktfläche mit einem Scheibenelement kleiner als die andere Kontaktfläche mit dem anderen Scheibenelement ist. Die Wärmeleitfähigkeit von einem zweiten Scheibenelement zu einem ersten Scheibenelement kann reduziert werden. Auch kann ein Abstandshalterelement gemäß anderen Varianten der Erfindung eine mehreckige Form, wie eine kubische oder hexagonale Form, aufweisen. Ferner kann ein Abstandshalterelement kugelförmig gebildet sein.

Bevorzugt können sämtliche Abstandshalterelemente einer Vakuumisolierplatte die gleiche Form aufweisen. Es versteht sich jedoch, dass grundsätzlich aus anwendungsspezifischen Gründen in verschiedenen Bereichen der Vakuumisolierplatte auch unterschiedlich gebildete Abstandshalterelemente angeordnet werden können.

Um in besonders einfacher Weise die Abstandshalterelemente zwischen den zumindest zwei Scheibenelementen anzuordnen, ist erkannt worden, dass vorzugsweise eine Kunststoffschicht vorgesehen sein kann, wobei die Kunststoffschicht die Mehrzahl von Abstandshalterelementen aufweist. Mit anderen Worten kann eine vorgefertigte Kunststoffschicht bzw. Kunststoffplatte mit Abstandshalterelementen vorgesehen sein. Es ist nicht notwendig, die Abstandshalterelemente einzeln zwischen den Scheibenelementen anzuordnen. Die Kunststoffschicht kann auf ein Scheibenelement in einfacher Weise aufgebracht werden. Dann kann das zweite Scheibenelement aufgebracht werden. Der Herstellungsprozess kann vereinfacht und die Produktionsgeschwindigkeit signifikant erhöht werden.

Gemäß einer bevorzugten Ausführungsform kann die Mehrzahl von Abstandshalterelementen an der Kunststoffschicht anextrudiert sein. Ein Extrusionsverfahren ermöglicht in besonders einfacher Weise, eine Kunststoffschicht mit Abstandshalterelementen herzustellen. Es versteht sich, dass die Abstandshalterelemente auch in andere Weise erzeugt und insbesondere mit der Kunststoffschicht verbunden werden können.

Grundsätzlich kann die Kunststoffschicht eine beliebige Dicke aufweisen. Gemäß einer weiteren Ausführungsform kann die Kunststoffschicht eine Dicke zwischen 0,5 mm und 5 mm, bevorzugt zwischen 1 mm und 4 mm aufweisen. Insbesondere bei einer Dicke zwischen 1 mm und 4 mm kann eine Kunststoffschicht bereitgestellt werden, welche in einfacher Weise zwischen zwei Scheibenelementen angeordnet werden kann, ohne die Isolationseigenschaften der Vakuumisolierplatte zu beeinträchtigen.

Um die Kunststoffschicht in sicherer Weise mit einem Scheibenelement zu verbinden, kann gemäß einer bevorzugten Ausführungsform mindestens eine Haftvermittlerschicht zumindest zwischen der Kunststoffschicht und dem ersten Scheibenelement angeordnet sein. Die Kunststoffschicht und somit die mit der Kunststoffschicht verbundenen Abstandshalterelemente können in definierter Weise auf einem Scheibenelement platziert werden. Insbesondere kann durch die Haftvermittlerschicht, wie eine Laminationsfolie, verhindert werden, dass sich die Kunststoffschicht während der Herstellung der Vakuumisolierplatte und/oder während der Lebenszeit der Vakuumisolierplatte in unerwünschter Weise verschiebt.

Grundsätzlich kann als Haftvermittlerschicht ein beliebiger Klebstoff eingesetzt werden. Es ist erkannt worden, dass vorteilhafterweise die Haftvermittlerschicht eine Klebstofffolie sein kann. Eine Klebstofffolie kann in einfacher Weise appliziert werden. Zudem kann eine Haftvermittlerschicht bereitgestellt werden, welche über ihre gesamte Fläche eine (nahezu) gleiche Dicke aufweist. Besonders gute Ergebnisse konnten erfindungsgemäß mit einer Polyurethan-Klebstofffolie erzielt werden. Vorzugsweise ist die Haftvermittlerschicht eine transparente Haftvermittlerschicht. Es findet keine optische Beeinträchtigung der Vakuumisolierplatte statt.

Darüber hinaus können zur Herstellung der Kunststoffelemente verschiedene thermoplastische Kunststoffe verwendet werden. Beispielsweise können Polycarbonat, Polystyrol, Polymethylmethacrylat, Polyethylen, Polypropylen, Polyvinylchlorid, Polyester, Acrylbutadienstyrol und Blends davon verwendet werden. Gemäß einer weiteren bevorzugten Ausführungsform der erfindungsgemäßen Vakuumisolierplatte kann die Kunststoffschicht und/oder die Mehrzahl von Abstandshalterelementen aus einem transparenten thermoplastischen Kunststoff, insbesondere Polycarbonat, gebildet sein. Ein transparenter Kunststoff weist den Vorteil auf, dass die optischen Eigenschaften der Vakuumisolierplatte nicht beeinträchtigt werden. Im Gegensatz zu metallischen Abstandshalterelementen, welche stets sichtbar sind und daher die optischen Eigenschaften der Vakuumisolierplatte negativ beeinflussen, sind Abstandshalterelemente aus einem transparenter Kunststoff (nahezu) nicht für das menschliche Auge sichtbar.

Geeignete Polycarbonate sind beispielsweise Polycarbonate wie sie in den Druckschriften WO 2007/039130 und WO 2007/039131 beschrieben sind. Dies sind Homopolycarbonate, Copolycarbonate und thermoplastische Polyestercarbonate. Die Herstellung der Polycarbonate erfolgt vorzugsweise nach dem Phasengrenzflächenverfahren aus Dihydroxyarylverbindungen (im Folgenden auch als Diphenole bezeichnet) und Phosgen oder dem Schmelze-Umesterungsverfahren aus Diphenolen und Diarylcarbonatderivaten.

Bevorzugte Diphenole sind ausgewählt aus der Gruppe umfassend Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'-Bis-(4-hydroxyphenyl)-4-diisopropyl-benzol. Mischungen der Diphenole können ebenfalls eingesetzt werden.

Besonders bevorzugt sind 4,4'-Dihydroxydiphenyl, 2,2-Bis-(4-hydroxyphenyl)-propan oder Bis-(4-hydroxyphenyl)-3,3,5-trimethyl-cyclohexan oder Mischungen hieraus.

Zur Herstellung von Copolycarbonaten können auch 1 bis 25 Gew.-%, vorzugsweise 2,5 bis 25 Gew.- % (bezogen auf die Gesamtmenge an einzusetzenden Diphenolen), Polydiorganosiloxane mit Hydroxy-aryloxy-Endgruppen eingesetzt werden.

Ferner sind Polyestercarbonate und Block-Copolyestercarbonate geeignet, besonders wie sie in der WO 2000/26275 beschrieben sind. Aromatische Dicarbonsäuredihalogenide zur Herstellung von aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure. Polydiorganosiloxan-Polycarbonat-Blockcopolymere sind zeichnen sich dadurch aus, dass sie in der Polymerkette einerseits aromatische Carbonatstruktureinheiten und andererseits Aryloxyendgruppenhaltige Polydiorganosiloxane enthalten (z.B. US 3 189 662, US 3 821 325 und US 3 832 419).

Geeignete Polycarbonate haben bevorzugt mittlere Molekulargewichte M_{w} von 18.000 bis 40.000, vorzugsweise von 20.000 bis 36.000 und insbesondere von 23.000 bis 33.000. Die Gewichtsmittelmolekulargewichte Mw sind jeweils ermittelt durch Gelpermeationschromatographie und Eichung mit Polycarbonatstandard.

Die Polycarbonate weisen im allgemeinen MFR (Melt Flow Rate)-Werte von 2 bis 60 g/10 min, bevorzugt 2 bis 40 g/10 min, besonders bevorzugt 3 bis 18 g/10 min, insbesondere von 5 bis 13 g/10 min gemessen in Anlehnung an ISO 1133 bei einer Temperatur von 300 °C und einer Belastung von 1,2 kg.

Eine stabile Vakuumisolierplatte kann insbesondere erzielt werden, wenn gemäß einer anderen Ausführungsform der vorliegenden Vakuumisolierplatte der mittlere Abstand zweier benachbarter Abstandshalterelemente zwischen 10 mm und 100 mm, bevorzugt zwischen 20 mm und 90 mm liegt. Unter dem mittleren Abstand ist insbesondere der Abstand zwischen den Mittelachsen zweier unmittelbar benachbarter Abstandshalterelemente zu verstehen.

Des Weiteren kann die Höhe eines Abstandshalterelements gemäß einer weiteren Ausführungsform zwischen 0,3 mm und 5 mm, bevorzugt zwischen 0,5 mm und 4 mm liegen. Die Höhe kann insbesondere in Abhängigkeit der späteren Verwendung der Vakuumisolierplatte gewählt werden. Durch das zuvor beschriebene Extrusionsverfahren können mit hoher Genauigkeit Abstandshalterelemente mit der (nahezu) gleichen Höhe hergestellt werden.

Darüber hinaus können die Oberflächen der Scheibenelemente, insbesondere mindestens eine Außenoberfläche von mindestens einem Scheibenelement, gemäß einer weiteren Ausführungsform nach Bedarf eine zusätzliche Funktionalität (beispielsweise UV-Stabilisierung, Farbgestaltung, Mattierung, IR-Reflektion usw.) aufweisen. Beispielsweise können entsprechende Funktionalitäten durch Aufbringen von Schichten mittels Coextrusion oder durch Coating/Beschichtung erzielt werden.

Das Verfahren zum Aufbringen zusätzlicher Schichten aus Polycarbonat auf einer oder beiden Flächen eines Scheibenelements ist dem Fachmann bekannt. Die Überzugsschichten können beispielsweise UV-Absorber oder Perlglanzpigmente umfassen. Diese können mittels Coextrusion oder durch Lackieren oder durch Reverse-Roll-Coating aufgebracht werden.

In einer bevorzugten Ausführungsform kann die Vakuumisolierplatte lichtdurchlässig gebildet sein. Der Begriff "lichtdurchlässig" bezieht sich im Wesentlichen auf den sichtbaren Spektralbereich. Zur Charakterisierung dient der Wellenlängenbereich von 380 bis 780 nm, insbesondere die Wellenlänge von 550 nm. Die Lichtdurchlässigkeit, die hier mit T bezeichnet ist, wird in der wissenschaftlichen Literatur überwiegend mit τD65 symbolisiert. Der thermoplastische Kunststoff und optional die Beschichtung der Platte weisen bevorzugt eine Lichtdurchlässigkeit T von wenigstens 5 %, vorzugsweise 20 bis 94 % auf.

Weiterhin kann gemäß einer weiteren Ausführungsform der Wärmedurchgangskoeffizient U einer Vakuumisolierplatte zumindest kleiner als 0,8 W/(m²K), bevorzugt zumindest kleiner als 0,5 W/(m²K) sein. Derart geringe Wärmedurchgangskoeffizienten können insbesondere aufgrund der Kunststoffabstandshalterelemente erzielt werden.

Ein weiterer Aspekt der Erfindung ist ein Verglasungssystem umfassend mindestens eine zuvor beschriebene Vakuumisolierplatte. Es versteht sich, dass ein Verglasungssystem auch zwei oder mehr Vakuumisolierplatten aufweisen kann. Entsprechende Verglasungssysteme können beispielsweise für Gebäude verwendet werden. Ebenso können diese Verglasungssysteme in Kraftfahrzeugen verwendet werden.

Ein noch weiterer Aspekt der Erfindung ist ein Verfahren zur Herstellung einer Vakuumisolierplatte, insbesondere einer zuvor beschriebenen Vakuumisolierplatte, umfassend:
- Bereitstellen eines ersten Scheibenelements,
- Anordnen einer Mehrzahl von Abstandshalterelementen aus Kunststoff auf dem ersten Scheibenelement,
- Anordnen eines zweiten Scheibenelements auf der Mehrzahl von Abstandshalterelementen, und
- Verschließen des Randbereichs des ersten Scheibenelements und des zweiten Scheibenelements derart, dass ein Vakuum in einem Raum zwischen den Scheibenelementen erzeugt wird.

In einfacher Weise kann eine Vakuumisolierplatte mit guten Isolationseigenschaften hergestellt werden.

Gemäß einer ersten Ausführungsform des Verfahrens gemäß der vorliegenden Erfindung kann die Mehrzahl von Abstandshalterelementen auf eine Kunststoffschicht anextrudiert werden. In einfacher Weise kann eine Kunststoffplatte mit Abstandshalterelementen hergestellt werden. Die Abstandshalterelemente können jeweils eine vorgebbare Position aufweisen. Es ist insbesondere nicht erforderlich eine Vielzahl einzelner Abstandshalterelemente zwischen den beiden Scheibenelementen anzuordnen. Die vorgefertigte Kunststoffschicht mit den Abstandshalterelementen kann auf dem ersten Scheibenelement aufgebracht werden. Eine einfache Herstellung der Vakuumisolierplatte kann ermöglicht werden.

Für einen sicheren Halt und einer unveränderlichen Positionierung auf dem ersten Scheibenelement kann zumindest die Kunststoffschicht mit dem ersten Scheibenelement gemäß einer weiteren Ausführungsform verklebt werden. Insbesondere können geeignete Haftvermittler verwendet werden.

Darüber hinaus kann vorzugsweise als Haftvermittlerschicht eine Klebstofffolie, wie eine Polyurethan-Klebstofffolie, eingesetzt werden. In einer bevorzugten Ausführungsform des erfindungsgemäßen Verfahrens kann in einem Schritt zunächst eine Klebstofffolie auf das erste Scheibenelement oder die Kunststoffschicht aufgebracht werden. Es versteht sich, dass grundsätzlich auch jeweils eine Klebstofffolie auf das erste Scheibenelement und die Kunststoffschicht aufgebracht werden kann. Nach dem Aufbringen der Klebstofffolie können das erste Scheibenelement und die Kunststoffschicht mittels der Klebstofffolie verbunden werden. In einfacher Weise kann eine Vakuumisolierplatte mit einer gleichmäßigen Haftvermittlerschicht erzeugt werden.

Es versteht sich, dass die Vakuumisolierplatte auch drei oder mehr Scheibenelemente aufweisen kann, welche jeweils durch Kunststoffabstandshalterelemente voneinander beabstandet sein können.

Es gibt nun eine Vielzahl von Möglichkeiten, die erfindungsgemäße Vakuumisolierplatte, das erfindungsgemäße Verglasungssystem und das erfindungsgemäße Verfahren zur Herstellung einer Vakuumisolierplatte auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Vakuumisolierplatte gemäß der Erfindung,
- Fig. 2a: eine erste schematische Ansicht eines Ausführungsbeispiels einer Kunststoffschicht mit einer Mehrzahl von Abstandshalterelementen gemäß der vorliegenden Erfindung,
- Fig. 2b: eine weitere schematische Ansicht eines weiteren Ausführungsbeispiels einer Kunststoffschicht mit einer Mehrzahl von Abstandshalterelementen gemäß der vorliegenden Erfindung, und
- Fig. 3: ein Flussdiagramm eines Ausführungsbeispiels eines Verfahrens gemäß der Erfindung zur Herstellung einer Vakuumisolierplatte.

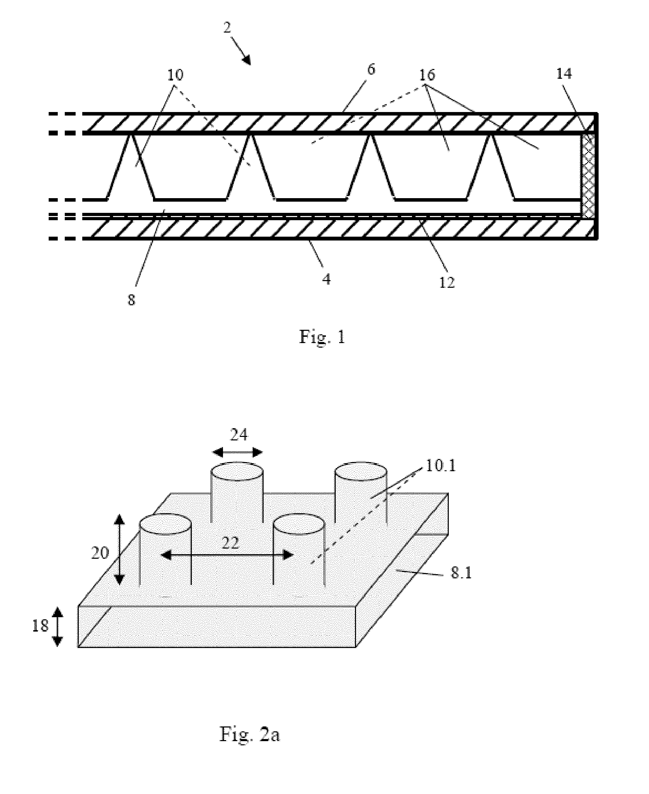

Figur 1 zeigt eine schematische Schnittansicht eines Ausführungsbeispiels einer Vakuumisolierplatte 2 gemäß der Erfindung. Die dargestellte Vakuumisolierplatte 2 weist ein erstes Scheibenelement 4 und ein zweites Scheibenelement 6 auf. Die Scheibenelemente 4, 6 sind gegenüberliegend und parallel zueinander angeordnet. Vorzugsweise können als Scheibenelemente 4, 6 geeignete Glasscheiben 4, 6 eingesetzt werden.

Ferner ist eine Mehrzahl von Abstandshalterelementen 10 zwischen dem ersten Scheibenelement 4 und dem zweiten Scheibenelement 6 angeordnet. Die Abstandshalterelemente 10 sind aus einem Kunststoffmaterial hergestellt. Insbesondere kann es sich um einen transparenten bzw. lichtdurchlässigen thermosplastischen Kunststoff handeln. Vorzugsweise können die Abstandshalterelemente 10 aus Polycarbonat gebildet sein.

Darüber hinaus ist vorzugsweise eine Kunststoffschicht 8 vorgesehen, welche die Abstandshalterelemente 10 aufweist. Die Kunststoffschicht 8 kann insbesondere vorgefertigt sein. Insbesondere kann die Kunststoffschicht 8 mit einer Mehrzahl von Abstandshalterelemente 10 vorgefertigt werden. Hierbei können die Abstandshalterelemente 10 an der Kunststoffschicht anextrudiert sein. Vorzugsweise ist diese Kunststoffschicht 8 aus einen transparenten bzw. lichtdurchlässigen thermosplastischen Kunststoff, wie Polycarbonat, gebildet. Eine derartige Noppenplatte 8 kann beispielsweise als Rollware bereitgestellt werden und für verschiedene Maße der Vakuumisolierplatte 2 zugeschnitten werden.

Um die Kunststoffschicht 8 mit den Abstandshalterelementen 10 sicher auf dem ersten Scheibenelement 4 anzuordnen, kann eine Haftvermittlerschicht 12 zwischen der Kunststoffschicht 8 und dem ersten Scheibenelement 4 vorgesehen sein. Sicher bedeutet insbesondere, dass die Abstandshalterelemente 10 bei Anordnung des weiteren Scheibenelements 6, der Evakuierung der Vakuumisolierplatte 2 und während der Lebensdauer der Vakuumisolierplatte 2 unveränderlich an der gleichen Position verbleiben.

Als Haftvermittlerschicht 12 können beliebige Klebstoffe eingesetzt werden. Besonders bevorzugt ist jedoch die Verwendung einer Klebstofffolie 12. Eine Klebstofffolie 12, insbesondere eine Polyurethan-Klebstofffolie 12, eignet sich besonders, um eine Kunststoffschicht 8, insbesondere eine Polycarbonatschicht 8, mit einem Scheibenelement 4 sicher und in einfacher Weise zu verbinden. Darüber hinaus weist eine Klebstofffolie 12 den Vorteil auf, dass sie eine gleichmäßige Dicke über ihre gesamte Fläche besitzt.

Bevorzugt sind die Abstandshalterelemente 10 kegel-, pyramiden- oder zylinderförmig geformt. Mit anderen Worten sind die Abstandshalterelemente 10 insbesondere noppenförmig gebildet. Wie in der Figur 1 zu erkennen ist, ist das breite Ende eines pyramiden- oder kegelförmigen Abstandshalterelements 10 mit der Kunststoffschicht 8 verbunden, während das schmalere Ende des Abstandshalterelements 10 das zweite Scheibenelement 6 kontaktiert. Hierbei kann das weitere Ende bevorzugt abgeflacht sein. Hierdurch wird eine kleine Auflagefläche erzielt. Eine Vakuumisolierplatte 2 mit einer hohen Stabilität kann bereitgestellt werden.

Darüber hinaus ist die Vakuumisolierplatte 2 an den umlaufenden Kanten mittels eines Randverschlusses 14 abgedichtet. Es versteht sich, dass zwischen der Kunststoffschicht 8 und dem Randverschluss 14 ein Zwischenraum vorgesehen sein kann. Der Raum 16 zwischen den Scheibenelementen 4 und 6 ist evakuiert. Eine gute Isolation zwischen den zumindest zwei Scheibenelementen 4, 6 kann hierdurch erzeugt werden. Diese wird insbesondere durch das eingesetzte Kunststoffmaterial für die Abstandshalterelemente 10 und durch deren Form weiter verbessert.

Es versteht sich, dass gemäß weiteren Varianten der Erfindung eine Vakuumisolierplatte 2 weitere Scheibenelemente aufweisen kann. Ferner können weitere Elemente, wie Solarmodule, vorgesehen sein. Auch kann mindestens ein Scheibenelement modifiziert sein. Beispielsweise kann ein Scheibenelement gefärbt und/oder beschichtet sein, um bestimmte Strahlungseigenschaften der Vakuumisolierplatte 2 zu ändern bzw. einzustellen.

Die Figur 2a zeigt eine vereinfachte Detailansicht einer Kunststoffschicht 8.1 mit einer Mehrzahl von Abstandshalterelementen 10.1. Wie zu erkennen ist, sind in dem abgebildeten Ausführungsbeispiel die Abstandshalterelemente 10.1 zylinderförmig gebildet. Im vorliegenden Ausführungsbeispiel bilden die vier Abstandshalterelemente 10.1 die Ecken eines Quadrates, so dass sich über die gesamte Fläche eine definierte Matrix ergibt. Es versteht sich, dass die Abstandshalterelemente 10.1 auch in anderer Weise zueinander angeordnet sein können.

Grundsätzlich können die Maße der Kunststoffschicht 8.1 und/oder die Maße der Abstandshalterelemente 10.1 in Abhängigkeit der herzustellenden Vakuumisolierplatte 2 gewählt werden. Bevorzugt liegt die Dicke 18 der Kunststoffschicht 8.1 zwischen ca. 1 mm und 4 mm. Die Abstandshalterelemente 10.1 können vorzugsweise eine Höhe 20 zwischen ca. 0,5 mm und 4 mm aufweisen. Der Durchmesser 24 von zylinderförmigen Abstandshalterelementen 10.1 kann vorzugsweise zwischen ca. 0,5 mm und 4 mm liegen. Darüber hinaus kann der mittlere Abstand 22, also der Abstand zwischen zwei Mittelachsen zweier (unmittelbar) benachbarter Abstandshalterelementen 10.1, vorzugsweise zwischen ca. 20 mm und 90 mm liegen.

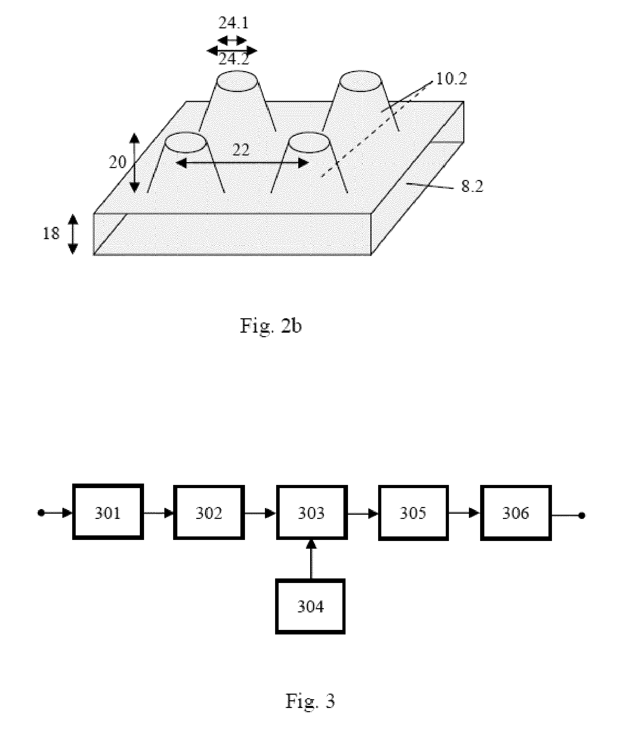

In der Figur 2b ist eine weitere vereinfachte Detailansicht einer weiteren Kunststoffschicht 8.2 mit einer Mehrzahl von Abstandshalterelementen 10.2 dargestellt. Im Unterschied zum Ausführungsbeispiel gemäß der Figur 2a sind die Abstandshalterelemente 10.2 gemäß der Figur 2b kegelförmig geformt. Hierbei sind die Enden der Abstandshalterelemente 10.2 abgeflacht. Das Ende mit der breiten Oberfläche eines Abstandshalterelement 10.2 kann einen Durchmesser 24.2 von ca. 4 mm aufweisen, während der minimale Durchmesser 24.1 des abgeflachten Endes eines Abstandshalterelement 10.2 ca. 0,5 mm betragen kann.

Figur 3 zeigt ein Flussdiagramm eines Ausführungsbeispiels eines Verfahrens gemäß der Erfindung zur Herstellung einer Vakuumisolierplatte. Insbesondere kann durch das erfindungsgemäße Verfahren eine zuvor beschriebene Vakuumisolierplatte 2 gemäß der Figur 1 hergestellt werden.

In einem ersten Schritt 301 kann ein erstes Scheibenelement 4 bereitgestellt werden. Insbesondere kann eine Glasscheibe 4 bereitgestellt werden. In einem nächsten Schritt 302 kann eine Haftvermittlerschicht 12, insbesondere eine Klebstofffolie 12, auf eine breite Oberfläche des Scheibenelements 4 aufgebracht werden. Es versteht sich, dass gemäß anderen Varianten der Erfindung auch andere Haftvermittlerschichten 12 aufgebracht werden können. Beispielsweise kann Klebstoff durch geeignete Rollen oder geeignete Sprühvorrichtungen aufgetragen werden.

Auf die Haftvermittlerschicht 12 kann wiederum die Kunststoffschicht 8 mit den Abstandshalterelementen 10 aufgebracht werden (Schritt 303). Die Kunststoffschicht 8 kann insbesondere vorgefertigt bereitgestellt werden. Beispielsweise können in einem vorherigen Schritt 304 die Abstandshalterelemente 10 zunächst angebracht werden. Vorzugsweise können die Abstandshalterelemente 10 anextrudiert werden. In besonders einfacher Weise können Abstandshalterelemente 10 mit einem vorgebbaren Abstand und einer vorgebbaren Form innerhalb der Vakuumisolierplatte 2 angeordnet werden.

Es versteht sich, dass gemäß anderen Varianten der Erfindung die Haftvermittlerschicht 12 zunächst auf die der Abstandshalterelemente 10 abgewandte Oberfläche der Kunststoffschicht 8 aufgebracht werden kann. Anschließend kann die Kunststoffschicht 8 mit dem Scheibenelement 4 verbunden werden. Beispielsweise kann die Kunststoffschicht 8 bereits mit einer aktivierbaren Klebstofffolie 12 versehen sein und entsprechend bereitgestellt werden. Wenn die Kunststoffschicht 8 mit der aktivierbaren Klebstofffolie 12 auf dem Scheibenelement 4 aufgebracht ist, kann die Klebstofffolie beispielsweise durch elektromagnetische Strahlung, Wärme, etc, aktiviert werden. Eine gute und sichere Verbindung zwischen Kunststoffschicht 8 und Scheibenelement 4 kann in einfacher Weise hergestellt werden.

In einem nächsten Schritt 305 kann ein zweites Scheibenelement 6 auf die Abstandshalterelemente 10 aufgebracht werden. Dann können die Kanten der Vakuumisolierplatte 2 abgedichtet und der Raum 16 6 zwischen den Scheibenelementen 4, 6 evakuiert werden (Schritt 306).

Es versteht sich, dass weitere Schritte folgen und/oder vorher durchgeführt werden können, wie ein Beschichten der äußeren Oberflächen der Vakuumisolierplatte 2 oder dass Anordnen eines weiteren Scheibenelements.

## Patentansprüche

1. Vakuumisolierplatte (2), umfassend:
- ein erstes Scheibenelement (4),
- mindestens ein zweites Scheibenelement (6),
- eine Mehrzahl von zwischen dem ersten Scheibenelement (4) und dem zweiten Scheibenelement (6) angeordneten Abstandshalterelementen (10, 10.1, 10.2), und
- einen Randverschluss (14) zum vakuumdichten Verschließen des Raumes (16) zwischen dem ersten Scheibenelement (4) und dem zweiten Scheibenelement (6),
**dadurch gekennzeichnet, dass**
mindestens ein Abstandshalterelement (10, 10.1, 10.2) aus einem Kunststoffmaterial gebildet ist.

2. Vakuumisolierplatte (2) nach Anspruch 1, **dadurch gekennzeichnet, dass** mindestens ein Abstandshalterelement (10.1) zylinderförmig geformt ist, mindestens ein Abstandshalterelement (10, 10.2) kegelförmig geformt ist, oder mindestens ein Abstandshalterelement (10) pyramidenförmig geformt ist.

3. Vakuumisolierplatte (2) nach Anspruch 1 oder 2, **dadurch gekennzeichnet, dass** eine Kunststoffschicht (8. 8.1, 8.2) vorgesehen ist, wobei die Kunststoffschicht (8, 8.1, 8.2) die Mehrzahl von Abstandshalterelementen (10, 10.1, 10.2) aufweist.

4. Vakuumisolierplatte (2) nach Anspruch 3, **dadurch gekennzeichnet, dass** die Kunststoffschicht (8, 8.1, 8.2) eine Dicke (18) zwischen 0,5 mm und 5 mm, bevorzugt zwischen 1 mm und 4 mm, aufweist.

5. Vakuumisolierplatte (2) nach Anspruch 3 oder 4, **dadurch gekennzeichnet, dass** die Mehrzahl von Abstandshalterelementen (10, 10.1, 10.2) an der Kunststoffschicht (8, 8.1, 8.2) anextrudiert ist.

6. Vakuumisolierplatte (2) nach einem der vorherigen Ansprüche 3 bis 5, **dadurch gekennzeichnet, dass** mindestens eine Haftvermittlerschicht (12) zumindest zwischen der Kunststoffschicht (8, 8.1, 8.2) und dem ersten Scheibenelement (4) angeordnet ist.

7. Vakuumisolierplatte (2) nach Anspruch 6, **dadurch gekennzeichnet, dass** die Haftvermittlerschicht (12) eine Klebstofffolie (12), insbesondere eine Polyurethan-Klebstofffolie (12), ist.

8. Vakuumisolierplatte (2) nach einem der vorherigen Ansprüche 3 bis 7, **dadurch gekennzeichnet, dass** die Kunststoffschicht (8, 8.1, 8.2) und/oder die Mehrzahl von Abstandshalterelementen (10, 10.1, 10.2) aus einem transparenten thermoplastischen Kunststoff, insbesondere Polycarbonat, gebildet sind.

9. Vakuumisolierplatte (2) nach einem der vorherigen Ansprüche, **dadurch gekennzeichnet, dass** der mittlere Abstand (22) zweier benachbarter Abstandshalterelemente (10, 10.1, 10.2) zwischen 10 mm und 100 mm, bevorzugt zwischen 20 mm und 90 mm, liegt.

10. Vakuumisolierplatte (2) nach einem der vorherigen Ansprüche, **dadurch gekennzeichnet, dass** die Höhe (20) eines Abstandshalterelements (10, 10.1, 10.2) zwischen 0,3 mm und 5 mm, bevorzugt zwischen 0,5 mm und 4 mm, liegt.

11. Verglasungssystem umfassend mindestens eine Vakuumisolierplatte (2) nach einem der vorherigen Ansprüche.

12. Verfahren zur Herstellung einer Vakuumisolierplatte (2), insbesondere einer Vakuumisolierplatte (2) nach einem der Ansprüche 1 bis 10, umfassend:
- Bereitstellen eines ersten Scheibenelements (4),
- Anordnen einer Mehrzahl von Abstandshalterelementen (10, 10.1, 10.2) aus Kunststoff auf dem ersten Scheibenelement (4),
- Anordnen eines zweiten Scheibenelements (6) auf der Mehrzahl von Abstandshalterelementen (10, 10.1, 10.2), und
- Verschließen des Randbereichs des ersten Scheibenelements (4) und des zweiten Scheibenelements (6) derart, dass ein Vakuum in einem Raum (16) zwischen den Scheibenelementen (4, 6) erzeugt wird.

13. Verfahren nach Anspruch 12, **dadurch gekennzeichnet, dass** die Mehrzahl von Abstandshalterelementen (10, 10.1, 10.2) auf eine Kunststoffschicht (8, 8.1, 8.2) anextrudiert wird.

14. Verfahren nach Anspruch 13, **dadurch gekennzeichnet, dass** die Kunststoffschicht (8, 8.1, 8.2) zumindest mit dem ersten Scheibenelement (4) verklebt wird.

15. Verfahren nach Anspruch 14, **dadurch gekennzeichnet, dass**
- eine Klebstofffolie (12) auf das erste Scheibenelement (4) oder die Kunststoffschicht (8, 8.1, 8.2) aufgebracht wird, und
- nach Aufbringen der Klebstofffolie (12) das erste Scheibenelement (4) und die Kunststoffschicht (8, 8.1, 8.2) mittels der Klebstofffolie (12) verbunden werden.
